# EUROPEAN PATENT APPLICATION

(11) **EP 4 513 228 A1**
(43) Date of publication of application: **26.02.2025**
(21) Application number: 23193540.4
(22) Date of filing: 25.08.2023
(51) Int. Cl.: G01S 7/481, G01S 17/34, G01S 17/32, G01S 17/42, G01S 17/66

(54) **TRACKING INSTRUMENT WITH RIGID OPTICAL MEASUREMENT UNIT AND COUPLED REFERENCE ELEMENT**

(71) Applicant: Hexagon AICON ETALON GmbH, 38114 Braunschweig (DE)
(72) Inventor: WISSMANN, Mark, 38102 Braunschweig (DE); BAUTSCH, Johannes, 38116 Braunschweig (DE); KAHLMANN, Timo, 38259 Salzgitter (DE); SCHWENKE, Heinrich, 38100 Braunschweig (DE)
(74) Representative: Kaminski Harmann

(57) **Abstract**

The invention relates to a laser tracker for a distance measurement to a target point using a measuring beam. A target axis of the measuring beam can be swivelled around a nodal point inside a revolution body shaped datum fixedly arranged inside a housing of the laser tracker. The laser tracker comprises an optical arrangement providing a measurement path to the target point and an internal reference path. The optical arrangement comprises an optics unit embodied as mechanically fixed arrangement and the laser tracker comprises a force supply arrangement providing a force acting on the optics unit (as a whole) causing the optics unit to maintain contact with the surface of the datum

## Description

### FIELD OF THE INVENTION

The present invention relates to a structure of a high-precision laser tracker configured to determine a distance to a target point using a measuring beam. The laser tracker comprises a revolution body shaped datum fixedly arranged inside a housing of the laser tracker and a target axis of the measuring beam can be swiveled around a fixed nodal point inside the datum.

### BACKGROUND OF THE INVENTION

High precision measurement or tooling machines, such as coordinate measuring machines, vision measuring machines, or articulated robotic arms need to be calibrated to improve their accuracy performance. Such systems are typically built to provide repetitive behavior, but not absolute accuracy. In other words, typical errors of such systems are systematic and can be compensated electronically following a determination. By way of example DE 199 47 374 A1 discloses a calibration method by a tracking instrument. From here on the term laser tracker represent a generic tracking instrument suitable to perform the calibration measurement substantially equivalent to the one disclosed in DE 199 47 374 A1. Said generic laser tracker also comprises the hardware and software components enabling an identification of a tracking target and the alignment of the laser tracker to the tracking target. Tracking targets for the present invention can equally represent cooperative and uncooperative targets.

Since submicrometer precision is required common laser trackers rely on an imaginary fixed point as a datum are ill-suited for this task. E.g. for a typical gimbal mounting a perfect datum requires that the two axes of rotation to be aligned such that they intersect at a point which also lies on the plane of the beam steering mirror. Moreover, the laser beam have to be aligned with said intersection point. All of these alignments should be performed with submicrometer accuracy, which is tedious, when not outright impossible.

As an alternative, laser trackers based on a datum following are developed, as disclosed e.g. in EP 0 919 830 A2, EP 1 959 226 A2, or in DE 20 2004 007 647 U1. Such systems are based on measuring the distance, particularly based on interferometric principles, from a physical datum embodied as a reflective sphere. To ensure the positional and thermal stability the mobile components of the laser tracker are decoupled from the datum. The mobile components are closely following the surface of the datum. Due to the existence of a physical datum small displacements of said components, i.e. the interferometer, have no influence on the measurement precision. The precision, ideally, only depends on the manufacturing tolerances of the physical datum which can be in the range of few tens of nanometers.

One drawback of the described construct is the fact that the physical datum acts as an optical reference surface. This requires complex optics and very tight mechanical tolerances to keep the wavefront of the interferometer, i.e. the signal quality, high. Moreover, the mobile elements of the laser tracker needs to be mechanically decoupled from the physical datum, which necessitates high accuracy steering mechanisms and control to follow the datum surface with a precision of <5µm, but in a non-touching manner.

Systems wherein the two functionalities of the physical datum, i.e. the mechanical datum and the optical reference surface, are realized by two separate components are thus desirable as they could provide similar precision with simplified mechanical and optical constructs.

### OBJECT OF THE INVENTION

In view of the above circumstances, an object of the present invention is to provide a laser tracker with simplified construct, while improving or maintaining the measurement precision.

Another objective of the present invention is to decouple the optical reference surface from the mechanical datum.

Another objective of the present invention is to prevent or at least reduce the influence of mechanical deformations on the precision.

These objectives are at least partly achieved by realizing the characterizing features of the independent claims. Features, which further develop the invention in an alternative or advantageous manner are described in the dependent patent claims.

### SUMMARY OF THE INVENTION

The present invention relates to a laser tracker for a distance measurement to a target point using a measuring beam. The laser tracker comprises a revolution body shaped datum fixedly arranged inside a housing of the laser tracker. A target axis of the measuring beam can be swiveled around a fixed nodal point inside the datum. By way of example from here on laser, as a specific embodiment, will be used interchangeably with measuring beam. The specific features of other types of optical measuring beams might be applied accordingly.

The inventive laser tracker belongs to the group of high-precision tracking instruments. In particular, the laser tracker provides distance data with better than 1 µm precision. Contemporary laser trackers realize this precision on the basis of interferometric or time of flight measurements. By way of example many features of the inventive laser tracker will be disclosed in combination with interferometric measurements. This, nevertheless, shall not be construed in a limiting fashion. The skilled person understands that the inventive aspects are applicable in combination with many different types of tracking instruments. The specific features of tracking instruments operating on different distance measuring principles, e.g. pulse time of flight, or frequency-modulated continuous mode lidar, might be applied accordingly.

The laser tracker comprises an optical arrangement configured to provide a measurement path of the measuring beam to the target point and an internal reference path. The optical arrangement comprises an optics unit and a fiber connected to a source of the measuring beam. The optics unit comprises, (i) a feed-in point for the fiber, (ii) a beam exit for emitting the measuring beam along the target axis, (iii) a contacting surface configured to contact a tangential point on a surface of the datum. The skilled person understands that, unless the contrary is expressly provided, the above and any further numbering serves readability purpose only and does not represent a specific spatial order or temporal sequence. Reasonable variations of component geometries or sequences to perform methodical steps are within the sense of the present invention.

The optics unit is embodied as mechanically fixed arrangement. I.e. the optics unit, under the expected forces and torques, can be approximated by a rigid body. The optics unit does not comprise any mechanical intervention options that would allow a user of the laser tracker to actively interfere with the mechanical arrangement of the optics unit to alter the optical path length between the feed-in point and the beam exit. The optics unit also does not comprise any movable component that is intended to alter the optical path length between the feed-in point and the beam exit during operation of the laser tracker. In other words (from possibly unavoidable but negligible thermal expansion aside) the optical path between the feed-in point and the beam exit is invariant. Invariant in the sense of the invention means that the optical path does not change during a measurement operation due to a pose change of the optics unit or the tracker as a whole. The optics unit might comprise beam deflection and beam shaping elements configured to provide said optical path. The section of the measuring beam inside the optics unit can be especially realized as a free-beam, while the beam deflection and beam shaping elements can comprise high-reflectivity mirrors, semitransparent mirrors, collimating and focusing lenses. The optics unit might be realized without polarization splitters or waveplates. While one aspect of the present invention relates to enabling simplified optics units, nevertheless the present invention is applicable with many reasonable embodiments of the optics unit. Some embodiments are known from the state of the art and the skilled person is competent to select a suitable one.

The contacting surface is configured to touch the datum, thereby constraining the movement of the optics unit. In other words, the pose of the various components of the optics unit are precisely defined, in particular comparably to datum itself. In the sense of the present invention further optical components located at least partly outside the housing of the laser tracker, e.g. light guides, laser sources etc., are not considered to be part of the optics unit, but they may be part of the optical arrangement as a whole.

The laser tracker is configured to use the surface of the datum as a mechanical guide for a movement of the optics unit about the nodal point. The laser tracker comprises a force supply arrangement configured to provide a force acting on the optics unit (as a whole). The force acting on the optics unit causes the optics unit to maintain contact with the surface of the datum via the tangential points of the surface of the datum.

In other words, the datum defines the optical reference surface. The datum can define the optical reference directly or indirectly, in particular by enabling a controlled movement of an optical reference element whose pose is invariably defined with respect to the datum. The advantage of the indirect definition is the possibility to utilize a further element, e.g. an optical flat or an end face of the fiber, to act as optical reference. This allows a simpler design of the optics unit as well as less stringent requirements on the individual components. Moreover, by decoupling the mechanical and optical reference surfaces the optical properties of the datum become irrelevant. By way of example only the indirect definition of the optical reference surface will be discussed in details.

In some embodiments, the datum is spherical and the nodal point is the center of mass of the spherical datum. Due to the precision requirements sphere is to be understood in a strict manner. In particular the datum possess an ISO-21920-2:2021 RMS surface roughness below 20 nm and form deviations below 200 nm. In other words the mechanical datum can be foreseen as a perfect sphere, and the optics unit is configured to move along the surface of this sphere.

In some embodiments, the force provided by the force supply arrangement is constant in time and independent of the pose of the optics unit. In other words, the weight of the optics units and the components driving it about the datum plays no role in setting the contact force. Moreover, in some embodiments, said force is negligible with regard to the compliance of the mechanical datum and its mounting.

In some embodiments, the contacting surface is embodied as a wear-free diamond surface, particularly a wear-free diamond plate.

In some embodiments, the force supply arrangement comprises a spring, in particular a pre-tensioned coil spring. The spring is configured to generate a spring force acting on the optics unit and causing the optics unit to maintain contact with the surface of the datum.

In some specific embodiments, the force supply arrangement is provided by a spring-pair mounted such that the lines of action of the springs of the spring pair are parallel to the target axis and the target axis is located between the lines of action. Such embodiments are advantageous since balancing the tangential components and/or moments of the spring forces is less challenging with a plurality of springs. Other geometries comprising three or more springs are also possible in the sense of the present invention.

In some embodiments, the laser tracker is configured to provide magnetic attraction between the optics unit and the datum to maintain the contact with the surface of the datum. Magnet-based contacting is advantageous, because no external force is applied to the datum apart from friction and gravity forces. In other words, the datum and the optics unit can be realized as a system mechanically decoupled from environment and/or the further components of the laser tracker. Magnet-based contacting is also advantageous as magnetic forces can be precisely controlled, unlike to the spring force which might drift due to the wear and tear of the spring.

In some specific embodiments, the force supply arrangement is provided by a magnetic element arranged at the optics unit, particularly at or in the vicinity of the contacting surface, more particularly next to a contacting point on the contacting surface for contacting the tangential point. The datum is configured to be magnetically attractable. More specifically, the magnetic is element embodied as a permanent magnet or an electromagnet and the datum comprises or is made from ferromagnetic material. Permanent magnet based magnetic elements are advantageous as they require no power lines, i.e. wiring which might exert force on the carriage during the movement of the optics unit. Electromagnets on the other hand may allow an electronic control of the force between the contacting surface and the tangential point.

In some specific embodiments, the force supply arrangement comprises at least one guide allowing a uniaxial translation of the optics unit. In particular the direction of the uniaxial translation is parallel to the target axis. I.e. a displacement of the target axis is prevented by preventing a rotation of the optics unit.

In some specific embodiments, the magnetic element is mounted with its pole axis parallel to the target axis. Alternatively or additionally, the force supply arrangement comprises or provided by a pair of magnetic elements mounted such that the target axis is located symmetrically between the pole axes of the magnetic elements.

In some embodiments, the laser tracker comprises a suspension arrangement for force-free suspension of the optics unit. In particular the suspension arrangement is configured to support the weight of the optics unit such that a gravity-induced interaction between the contacting surface and the surface of the datum is minimized, in particular prevented, in each relative pose of the optics unit relative to the surface of the datum. These embodiments allow an improved precision in spite of the direct mechanical contact between the datum and the optics unit, as the force applied to the datum is reduced exclusively to a friction of the swivel bearing, regardless of the angle or installation position of the overall system. In other words, these embodiments enable simpler design with larger tolerances of the interferometer and the mechanics.

In some embodiments, the suspension arrangement comprises a tilt axis piercing a center of mass of optics unit and thereby allow a force-free tilting of the optics unit about the tilt axis. The tilt axis might be horizontal i.e. parallel to a defined plane of the laser tracker. In other words, for correctly justified poses of the laser tracker, the tilt axis is perpendicular to the direction of gravity. The tilt axis might be foreseen as a continuous single-piece physical axis, but can also be an imaginary rotation axis, e.g. provided by a suspension arrangement providing multiple degrees of freedom for the movement of the optics unit.

In some specific embodiments, the tilt axis is perpendicular to and offset from the target axis, and the tilt axis and the tangential point define a plane tangential to the surface of the datum. In alternative wording, for any position of the optics unit relative to the datum, the center of mass of the optics unit and the tangential point (to be contacted by the contacting surface of the optics unit during operation) are lying on a line tangential to the surface of the datum. Consequently, the optics unit can only exert force on the datum along the latter's normal.

In some specific embodiments, the suspension arrangement comprises a swivel or rotary bearing, in particular embodied as low friction ball- or roller bearing, to provide or mount the tilt axis.

In some specific embodiments, the optics unit comprises at least one counterweight mounted in such a way as to ensure that tilt axis pierces the center of mass of optics unit, in particular wherein the counterweight is mounted in an adjustable manner. Due to the high precision requirements adjustable in the sense of the invention means "factory adjustable", i.e. the pose or the weight of the counterweight might be adjustable during a rare calibration event and not during the everyday use of the laser tracker.

In some embodiments, the laser tracker is configured to perform the distance measurement based on interferometric principles. In particular the laser tracker is configured to provide the distance measurement to the target point with submicrometer precision. While the inventive laser tracker, in principle, is compatible with non- or partly interferometric methods such as frequency modulated continuous wave lidar, interferometry measurements represents an overall adequate compromise between accuracy and size/weight of the optical arrangement.

In some specific embodiments, the fiber is embodied as a non-polarizing single mode fiber and the feed-in point provides an optical reference point for the internal reference path. The distance to the target point might also be measured from the feed-in point. Such interferometric designs are known from the prior art. In some specific embodiments, a distal end of the fiber located outside the housing and optically coupled to a fiber splitter. Having a laser source outside the housing of the laser tracker is advantageous due to the constrained space and from thermal management point of view. Design elements configured to minimize the inaccuracy caused by the force exerted by the fiber connected to an outside point are also known from the prior art.

In some embodiments, the optics unit comprises a first part having a first thermal expansion coefficient and a second part having a second thermal expansion coefficient. The first thermal expansion coefficient is less than 10⁻⁵ K⁻¹, in particular less than 10⁻⁶ K⁻¹. The second thermal expansion coefficient correlates with the thermal expansion coefficient of the datum. The second part is dimensioned such that its thermal expansion compensates the thermal expansion of the datum. In other words, the first part is made of an invar alloy. Due to machining requirements, the datum itself cannot be made of such alloys, thus an insert of the optics units is configured to compensate a thermal expansion of the datum as well as changes of the refractive indices due to thermal effects.

In some embodiments, the laser tracker comprises a base plate. The base plate has a fixed spatial relationship with the datum and is configured to define an orientation of the laser tracker with respect to an external coordinate system. The housing is rotatable relative to the base plate.

In some specific embodiments, the laser tracker comprises a support unit supporting the optics unit. The support unit is mounted to the base plate rotatably. The housing is mounted to the support unit. The thermal expansion coefficients of the base plate and the support unit are selected to minimize the thermal movement of the reference point in regard to the base plate.

In some specific embodiments, the housing is configured to enclose the datum and the optics unit in a dust-and humidity protected manner. The housing comprises a fixed exit window transparent for the measuring beam, such that for the distance measurement to the target point, the measuring beam exits at the beam exit of the optics unit and then passes the exit window. In some particular embodiments, the exit window is of cylindrical shape and has an extent of at least 50°, in particular at least 80°, in direction perpendicular to the plane of base plate. Large exit windows are advantageous as they enable a design, wherein the exit window is built in the housing with a fixed inclination. This embodiment offers many beneficial properties (i) the housing can be realized as a hard case offering better mechanical properties, (ii) due to the lack of moving components the sealing can realized in a more reliable manner, and (iii) the drive apparatus of the exit window and/or a direct mechanical coupling between the optics unit and the exit window can be omitted which eliminates one possible source of inaccuracy for the measurement. Latter is especially advantageous, as unlike to the prior art, the optics unit and the datum are in mechanical contact with each other.

The exit window might be formed from chemically strengthened silicate-based glass or from sapphire-based material.

While contemporary manufacturing techniques do not enable to produce the exit window with the required homogeneity, such measurement errors, due to the fixed geometry can be characterized and stored in a look-up-table for compensation. In other words, improved accuracy can be realized by straightforward means.

In some specific embodiments, the laser tracker comprises a handle with fixed spatial relationship to the base plate. The laser tracker is configured to provide a transport mode. In the transport mode a rotation of the housing is locked, and the exit window is positioned between the datum and the handle. In some particular embodiments, the exit window is automatically positioned to the opposite side of the handle during a startup sequence. In some specific embodiments, the handle is dismountable to allow a full, 360° measurement of the azimuth axis.

In some specific embodiments, the base plate comprises three pads protruding from the base plate on the side opposite to the datum and providing a three-point support for the baseplate. The pads define the plane of the base plate. The pads might be realized as fixed or leveling feet. The base plate comprises a plurality of drill holes. The drill holes are configured to accommodate fastening elements providing a mechanical coupling to an external object, in particular bolts connected to corresponding sliding blocks. The plurality of drill holes comprise a first and a second group. Each of the drill holes of the first group of drill holes is located within one of the three pads. The second group of drill holes comprises at least one drill hole outside the three pads. For the skilled person it is clear that drill holes represent generic class of features configured to accommodate said fastening elements and different types of closed or open recesses are drill holes in the sense of the invention.

In some specific embodiments, a plane defined by a first drill hole from the first group, a second drill hole from the second group and the nodal point is perpendicular to the plane of the base plate. In other words, the first and the second drill holes are laying on a line which intersects a projection of the nodal point to the base plane. The first and the second drill holes might be equidistant from the nodal point.

In some specific embodiments, the drill holes of the first group, and in particular at least one drill hole of the second group, are arranged equidistantly from the nodal point. In particular, wherein the pads are arranged to an equilateral triangle.

In some specific embodiments, the second group comprises a plurality of drill holes, in particular two. More particularly, the drill holes of the second group are arranged such that each drill hole of the second group is associated with a respective drill hole of the first group and the plane defined by said two drill holes and the nodal point is perpendicular to the plane of the base plate.

For example, the base plate comprises for each of the pads a drill hole of the second group in an opposing position. The drill holes of the first and second group might be located on the perimeter of the base plate in a regular hexagonal arrangement. Alternatively, the handle might be arranged in a position opposing one of the pads and the base plate comprises two drill holes of the second group in a position opposing the further pads.

In some specific embodiments, one of the drill holes of the first group and one of the drill holes of the second group provides a fastening axis and the base plate has reflection symmetry with respect to the fastening axis.

The invention further relates - on its own or in combination with any of the features described above - to a laser tracker, wherein a target axis of a measuring beam can be swiveled around a fixed nodal point inside a revolution body shaped datum. The datum is fixedly arranged inside a housing of the laser tracker. The laser tracker comprises an optical arrangement configured to provide a measurement path of the measuring beam to the target point and an internal reference path. The optical arrangement comprises an optics unit and a fiber connected to a source of the measuring beam. The optics unit comprises (i) a feed-in point for the fiber, (ii) a beam exit for emitting the measuring beam along the target axis. The laser tracker is configured to use the surface of the datum as a mechanical guide for a movement of the optics unit about the nodal point. The optics unit might comprise a reference point on the surface of the datum. The laser tracker comprises base plate. The base plate has a fixed spatial relationship with the datum and is configured to define an orientation of the laser tracker with respect to an external coordinate system. The housing is rotatable relative to the base plate. The base plate comprises (i) three pads protruding from the base plate on the side opposite of the datum and providing a three-point support for the base plate, (ii) a plurality of drill holes configured to accommodate fastening elements providing a mechanical coupling to an external object, in particular bolts connected to corresponding sliding blocks. The plurality of drill holes comprise a first and a second group. Each of the drill holes of the first group of drill holes is located within one of the three pads. The second group of drill holes comprises at least one drill hole outside the three pads.

The invention also relates - on its own or in combination with any of the features described above - to a laser tracker, wherein a target axis of a measuring beam can be swiveled around a fixed nodal point inside a revolution body shaped datum. The datum is fixedly arranged inside a housing of the laser tracker. The laser tracker comprises an optical arrangement configured to provide a measurement path of the measuring beam to the target point and an internal reference path. The optical arrangement comprises an optics unit and a fiber connected to a source of the measuring beam. The optics unit comprises (i) a feed-in point for the fiber, (ii) a beam exit for emitting the measuring beam along the target axis. The laser tracker is configured to use the surface of the datum as a mechanical guide for a movement of the optics unit about the nodal point. The optics unit might comprise a reference point on the surface of the datum. The laser tracker comprises base plate. The base plate has a fixed spatial relationship with the datum and is configured to define an orientation of the laser tracker with respect to an external coordinate system. The housing (i) is rotatable relative to the base plate, (ii) is configured to enclose the datum and the optics unit in a dust-and humidity protecting manner, and (iii) comprises a fixed exit window transparent for the measuring beam, such that for the distance measurement to the target point, the measuring beam exits at the beam exit of the optics unit and then passes the exit window.

In some embodiments the laser tracker comprises a handle with fixed spatial relationship to the base plate. The laser tracker is configured to provide a transport mode. In the transport mode a rotation of the housing is locked, and the exit window is positioned between the datum and the handle. In some particular embodiments, the exit window is automatically positioned to the opposite side of the handle during a startup sequence. In some specific embodiments, the handle is dismountable.

### BRIEF DESCRIPTION OF THE DRAWINGS

By way of example only, specific embodiments of the invention will be described more fully hereinafter with reference to the accompanying figures, wherein:
Figure 1 depicts the schematics of a prior art laser tracker.
Figure 2 depicts the schematics of an embodiment of the inventive laser tracker comprising a spring-pair as force setting elements.
Figure 3 depicts the schematics of an embodiment of the inventive laser tracker comprising a magnet as force setting elements.
Figure 4 depicts the schematics of an embodiment of the inventive laser tracker with a suspension arrangement for force-free suspension of the optics unit.
Figure 5 depicts the schematics of an embodiment with large field of view fixed exit window.
Figure 6 depicts the base plate with pads and drill holes as viewed from the bottom.

### SPECIFIC EMBODIMENTS OF THE INVENTION

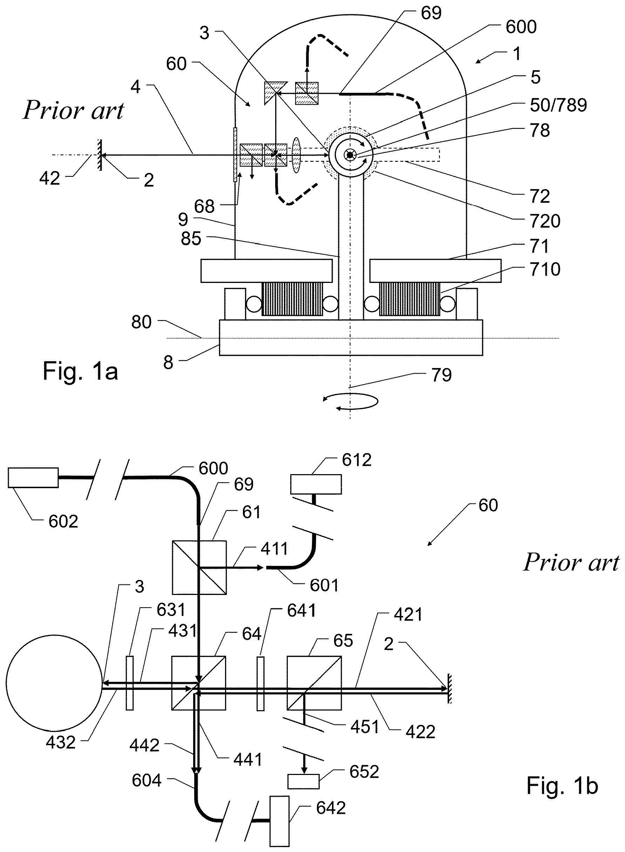

Figure 1a shows schematically a prior art laser tracker **1**. The laser tracker **1** is configured to determine distance between a target point **2** and an optical reference point **3**. The target point **2**, in some embodiments, is a specially designed retroreflector. The laser tracker **1** is configured to track a movement of the target point **2**. Various tracking methods are known from the prior art, and the skilled person can provide a suitable tracking method. The present invention is not limited to any specific tracking methods known, in particular the present invention is applicable to refinements, enhancement of said or suitable alternative methods. The optical reference point **3**, in the depicted embodiment, is on the surface of a mechanical datum **5**. The datum **5** is mounted to a base plate **8** in a rigid manner by a shaft **85**. The base plate **8** is configured to define a relative orientation of the laser tracker **1** with respect to an external coordinate system, in particular to define a plane **80** of the base plate **8**.

To determine the distance between the target point **2** and the optical reference point **3** the laser tracker **1** comprises an optical arrangement **60**. The optical arrangement **60** comprises a fiber **600**, and an interferometer. A distal end of the fiber **600**, coupled to a laser source, which might be located outside the housing **9** of the laser tracker **1**. The components of the optical arrangement **60** located inside housing **9** of the laser tracker **1** and configured to move substantially together can be regarded as an equivalent of the optics unit.

The interferometer comprises a feed-in point **69** for the fiber **600** and a beam exit **68** for emitting the measuring beam **4** along the target axis **42**. The interferometer transmits the measuring beam **4**, and defines a section of the optical path inside the interferometer of the laser tracker **1**. Some key features of the depicted interferometer are shown in more details in Figure 1b.

The laser tracker **1** also comprises a carriage configured to align the optical arrangement **60** such that a target axis **42**, corresponding to a section of a measuring beam path outside of the housing **9**, intersects the target point **2** and a nodal point **50** of the datum **5**. In other words, the carriage is configured to rotate a part of the optical arrangement **60** about the nodal point **50** in the datum **5**.

By way of example the carriage comprises a support unit **71** mounted to the base plate **8** and a first motor **710**, e.g. a direct-drive dc servo motor, to rotate the support unit **71** about a first axis of rotation **79**. The first axis of rotation **79** coincides with the shaft **85** of the datum **5**. The carriage also comprises a yoke **72** and a second motor **720** to tilt the yoke **72** about a second axis of rotation **78** perpendicular to the first axis of rotation **79**. The intersection **789** of the first **79** and the second axes of rotation **78** coincides, within the required accuracy, with the nodal point **50**. While the interferometric measurement principle is tolerant to small lateral offsets of the interferometer, nevertheless µm range accuracy is required from the components **71,72,710,720** of the carriage. Many alternatives of the depicted prior art carriage exists and the applicability of the present invention is not limited to a specific variant.

Figure 1b illustrates an embodiment of the optical arrangement **60**, and particularly the interferometer known from the prior art. The interferometer is a moving together with the carriage. For this reason, the laser source **602** cannot be fed directly to the interferometer, so a polarisation-maintaining fiber **600** is used to launch the two orthogonal polarisations into the interferometer at the feed-in point **69**. Disturbances of the polarisation maintaining fiber **600** e.g. due to thermal drift or mechanical motion will induce mixing of the two orthogonal polarisations within the fiber **600**. To prevent this mixing from affecting the accuracy of the displacement measurement, a reference counter signal **411** is extracted at the interferometer by a first beam-splitter **61**. In this way, the effect of polarisation mixing is common to the reference counter signal and to the measurement counter signal and are thus eliminated. This signal is fed via an optical fiber **601** to the reference count input **612** on the counter card.

A polarising beam-splitter **64** separates the two orthogonal polarisations. One goes straight through as a reference **441**. The second **431** is sent via a quarter-wave plate **631** to the optical reference point **3** and back **432** through the quarter-wave plate **631** to the polarising beam-splitter **63**. Each pass through the quarter-wave plate **631** rotates the polarisation state of the beams **431,432** through 45°. The targeting beam **421** then passes through the polarising beam-splitter **64** and a second quarter-wave plate **641** to the target point **2**. The target **2** retro-reflects a return beam **422** back through the quarter-wave plate **641** which ensure that on hitting polarising beam-splitter **64**, the measuring beam **442** is reflected out to interfere with the reference beam **441**. The measurement signal produced by this interference is transmitted via optical fiber **604** to the measurement count input **642** on the counter card. A third beam-splitter **65** is used to direct a fraction **451** of the return beam **422** from the target **2** to a position-sensitive detector **652** which provides position feedback for the tracking servo. For transparency reasons, collimating, focusing and further beam shaping elements are not shown. The skilled person can provide such elements based on the prior art.

As can be seen the prior art system requires a rather complex optical arrangement **60** due to the requirements of the moving interferometer and due to the mechanical datum directly providing the optical reference point **3**. The latter also necessitates that the mechanical datum shall possess a surfaces which can provide the optical reference point **3**.

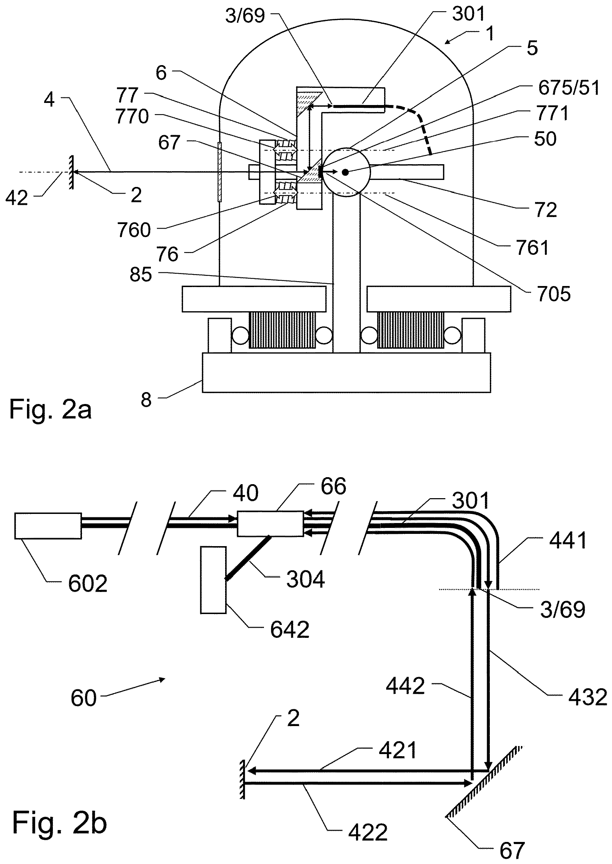

Figure 2a illustrates the schematics of a first embodiment of the inventive laser tracker **1**. In the depicted realization of the inventive concept the mechanical datum **5** does not provide the optical reference point **3** directly. The optical reference point **3**, depicted as the feed-in point **69** of a non-polarizing single mode fiber **301**, performs a defined, i.e. constrained movement along a surface. The nodal point **50** of said surface and the center point of the datum **5** coincide. The optical arrangement comprises a mechanically fixed optics unit **6**, i.e. its internal components, including the feed-in point **69**, possess defined spatial relationship to each other. The depicted optics unit **6** is mounted on the yoke **72** such that its pose is defined by the pose of the yoke **72**. The yoke **72**, as in Figure 1a, is part of the carriage aligning the optics unit **6** such that the measuring beam **4** is hitting and reflected back from the target point **2**.

The optics unit **6** comprises contacting surface **675**, in particular a wear-free diamond plate, configured to contact a tangential point **51** on a surface of the datum **5**. This contact ensures a defined spatial relationship between the optical reference point **3** and the datum **5**. A high-reflectivity mirror **67** configured to deflect the measuring beam **4** is mounted together with the contacting surface **675**.

The laser tracker **1** comprises a force supply arrangement, embodied as a spring-pair **76,77** configured to provide a contact force **705**, i.e. a net force arising from the spring forces **760,770,** between the contacting surface **675** and the datum **5**. The spring-pair **76,77** is mounted such that their lines of action **761,771** is parallel to the target axis **42** and the target axis **42** is located between the respective lines of action **761,771.** While a spring-pair **76,77** represents a good compromise between the complexity and weight of the force providing element and the balancing of the tangential components of the contact force **705** the present invention can be realized by other spring geometries.

The contact force **705** is set such that it causes no substantial deformation or displacement of the mechanical datum **5**. In other words spring-pair **76,77** is configured to provide a spring force **760,770** which is negligible in regard to the compliances of the datum **5**, the shaft **85** or the base **8**. To achieve a required precision in the submicrometer range the contact force **705**, i.e. the spring forces **760,770** cannot exceed 100 mN, preferably 10 mN.

Figure 2b shows a schematic description of an optical arrangement **60** of the laser tracker depicted in Figure 2a. Since the datum is not an optical component the requirements for the wavefront quality are significantly reduced. This enables a much simpler interferometer as compared to the design of Figure 1b. The laser light **40** from a stabilized laser source **602** is fed to a fiber splitter **66** connected to the non-polarising single mode fiber **301**. The feed-in point **69**, which is located in the housing of the laser tracker and has fixed spatial relationship with the further components of the interferometer, reflects back a part of the laser light to the fiber **301**. The reflected laser light acts as reference light **441**, while the feed-in point **69** acts as optical reference point **3**.

The light emanating **432** from reference point **3** is deflected by the respective beam deflection element, e.g. a high reflectivity mirror **67**, towards the target **2**. The target **2** reflects the transmitted beam **421** back towards the mirror **67**. The return beam **422** is deflected towards the optical reference point **3** by the mirror **67**. The measuring beam **442** enters the fiber **301** and interferes with the reference beam **441**. The measurement signal produced by this interference is decoupled by the fiber splitter **66** and transmitted via optical fiber **304** to the measurement count input **642** on the counter card.

Said design is not only advantageous from complexity and cost point of view, but also for measurement accuracy. The interferometer is mobile component rotating about the datum. I.e. its weight and a deformations arising from this weight are important source of systematic errors, i.e. reduced weight is desirable for generic laser trackers.

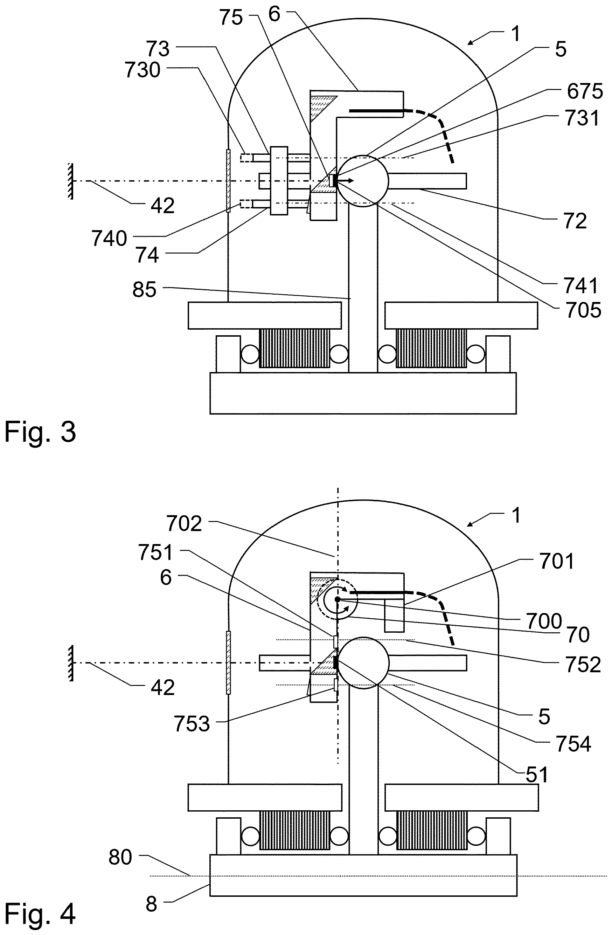

Figure 3 shows a second embodiment of the inventive laser tracker **1**. The key difference between the second embodiment and the first embodiment depicted in Figure 2a is that the contact force **705** between the datum **5** and contacting surface **675** is provided by a magnetic element **75**, depicted as a permanent magnet, mounted on the contacting surface **675** on the side opposite of the side in contact with the datum **5**. Advantageously, magnetic attraction between the datum **5** and magnetic element **75** can be understood as purely internal force, i.e. no anchoring to a further component is needed. The datum **5** is made of or comprises ferromagnetic materials. The skilled person understands that variations on the number, the placement or the working principle of the magnetic element **75** are within the sense of the present invention. E.g. instead of a single permanent magnet a pair or trio electromagnets might be equally used.

The optics unit **6** is mounted to the carriage, represented by the yoke **72**, such that a pair of guides **73,74** and respective channels **730,740** allowing an uniaxial translation of the optics unit **6**. The magnetic element **75** is located between the axes **731,741** of the channels **730,740**. The axes **731,741** of the channels **730,740** are parallel with the target axis **42**. This geometry compensates the tangential components of the contact force **705**.

Figure 4 shows a third embodiment of the inventive laser tracker **1**. The key difference between the third embodiment and the second embodiment, depicted in Figure 3, is that the laser tracker **1** comprises suspension arrangement **70** for force-free suspension of the optics unit **6**. The suspension arrangement **70** is configured to support the weight of the optics unit **6** such that a gravity-induced interaction between the contacting surface **675** and the surface of the datum **5** is prevented in each relative pose of the optics unit **6** relative to the surface of the datum **5**.

In the depicted embodiment the suspension arrangement **70** comprises a tilt axis **700** piercing a center of mass of optics unit **6**. By way of example the tilt axis **700** is horizontal. Horizontal in the sense of the present invention can be understood as parallel to the plane **80** of the base plate **8**. In other words, for correctly justified poses of the laser tracker **1**, the depicted tilt axis **700** is perpendicular to the direction of gravity. The tilt axis **700** might be realized as a continuous, single-piece physical axis, but can also be realized as an imaginary rotation axis. The depicted tilt axis **700** is perpendicular to and offset from the target axis **42**. The tilt axis **700** and the tangential point **51** define a plane **702** tangential to the surface of the datum **5**. The optics unit **6** comprises a counterweight **701** mounted in such a way to ensure that tilt axis **700** pierces the center of mass of optics unit **6**. The suspension arrangement **70** also provides the functionality of the guides of the second embodiment, therefore they are not necessary in this embodiment.

In the depicted embodiment the force supply arrangement is provided by a pair of magnetic elements **751,753** mounted such that the target axis **42** is located between the pole axes **752,754** of the magnetic elements **751,753.**

It is clear for the skilled person that the depicted first, second and third embodiments are focused on showing some specific features of the inventive laser tracker. The individual features of these embodiments might be combinable with each other and/or replaced by suitable alternative features, or some of the optional features might be omitted completely.

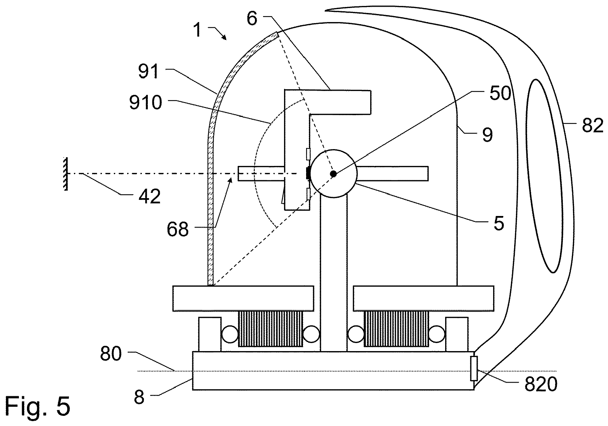

Figure 5 shows an embodiment, wherein the housing **9** comprises a fixed exit window **91**, such that for the distance measurement to the target point, the measuring beam along the target axis **42** exits at the beam exit **68** of the optics unit **6** and then passes the exit window **91**. The exit window **91** provides an inclination field of view **910** of at least 50°, in particular at least 80°, as view from the nodal point **50**. Inclination means perpendicular to the plane **80** of base plate **8**.

This design offers many advantages as compared to the prior art with small, movable exit windows **91**. Fixed exit windows **91** do not requires e.g. bellows, thus the housing **9** can be realized as a fully-enclosing hard case, which offers better safety as well as environmental sealing. Moreover, separate motors, synchronized with the optics unit **6**, or direct mechanical coupling between the optics unit **6** and the exit window **91** can also be omitted, which enables a more precise design of the laser tracker **1**.

The depicted embodiment also comprises a handle **82** with fixed spatial relationship to the base plate **8**. The depicted handle **82** comprises a mounting element **820** allowing a quick mounting/demounting of the handle **82** from the base plate **8**. The laser tracker **1**, as depicted, is in an operation mode, i.e. the exit window **91** and the handle **82** are located on the opposite sides of the datum **5**. The laser tracker **1** is configured to provide a transport mode, wherein a rotation of the housing **9** is locked, and the exit window **91** is positioned between the datum **5** and the handle **82**. The handle **82** covering the exit window **91** and provides a shielding against blow damage.

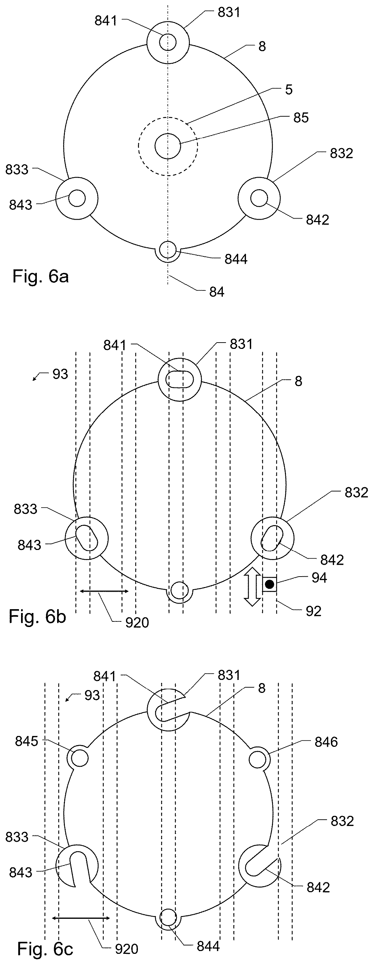

Figure 6a shows a schematic depiction of a base plate **8** according to the invention. The base plate **8** has three pads **831-833** protruding from the base plate **8** arranged near the perimeter of the base plate **8**. In the depicted embodiment the pads **831-833** are arranged in an equilateral triangular arrangement. The pads **831-833** define the plane of the base plate **8**. The pads **831-833** also have respective drill holes of the first group **841-843** configured to accommodate fastening elements providing a mechanical coupling to an external object. The fastening elements might be bolts connected to respective sliding blocks. By way of example the drill holes **841-843** are embodied as circular holes.

Due to the geometry of the external object three-point fixing is not always feasible. The base plate **8** therefore has a drill hole of the second group **844** spaced from the drill holes of the first group **841-843.** In this particular embodiment the drill hole of the second group **844** is arranged such one of the drill holes of the first group, i.e. drill hole **841**, and the drill hole of the second group **844** provides a fastening axis **84**. The base plate **8** has reflection symmetry with respect to the fastening axis **84**. This allows a two point fastening of the base plate **8**, with its fastening axis **84** located between the further two pads **832,833** i.e. a three-point support using the pads **831-833** is possible. In the depicted embodiment the fastening line **84** intersects the shaft **85** of the datum **5**, or in other words, a projection of the datum **5** to the base plane **8**. The second group might comprise further drill holes.

Figure 6b depicts a step of mounting the base plate **8** (with the laser tracker) to an external object **93** having a surface with grooves **92** enabling the positioning of sliding blocks **94**. The first group of drill holes **841-843** associated with the pads **831-833** are realized as elongated holes. The distance **920** of the grooves **92** is such that a three point fastening using the first group of drill holes **841-843** is possible.

Figure 6c depicts an alternative mounting situation. Here, due to the distance **920** of the grooves **92** on the external object **93**, a three-point mounting using the first group of drill holes **841-843** located inside the pads **831-833** is not possible. Contrary to that, a two-point mounting based on one drill hole of the first group **841-843**, here hole **841**, and one drill hole of the second group **844-846**, here hole **844**, is always possible, as two points can be aligned to a line. Since the selected first **841** and second holes **844** are in between the two further pads **832,833**, a three-point support based on the three pads **831-833** can also be realized. By way of example the first group of drill holes **841-843** are depicted as semi-open recesses and the second group of drill holes **844-846** are depicted as cylindrical holes. The skilled person understands that there are many suitable alternatives, thus that neither the depicted placement nor the shape of the drill holes **841-846** are to be construed in a limiting manner.

Although the invention is illustrated above, partly with reference to some specific embodiments, it must be understood that numerous modifications and combinations of different features of the embodiments can be made. All of these modifications lie within the scope of the appended claims.

## Claims

1. A laser tracker (1) for a distance measurement to a target point (2) using a measuring beam (4), wherein
- a target axis (42) of the measuring beam (4) can be swiveled around a fixed nodal point (50) inside a revolution body shaped datum (5) fixedly arranged inside a housing (9) of the laser tracker (1),
- the laser tracker (1) comprises an optical arrangement (60) configured to provide a measurement path of the measuring beam (4) to the target point (2) and an internal reference path (441),
- the optical arrangement (60) comprises an optics unit (6) and a fiber (301,600) connected to a source (602) of the measuring beam (4), wherein the optics unit (6) comprises
∘ a feed-in point (69) for the fiber (301,600),
∘ a beam exit (68) for emitting the measuring beam (4) along the target axis (42), and
∘ a contacting surface (675) configured to contact a tangential point (51) on a surface of the datum (5), and
- the laser tracker (1) is configured to use the surface of the datum (5) as a mechanical guide for a movement of the optics unit (6) about the nodal point (50),
**characterized in that**
- the optics unit (6) is embodied as mechanically fixed arrangement, and
- the laser tracker (1) comprises a force supply arrangement configured to provide a force (705) acting on the optics unit (6), which causes the optics unit (6) to maintain contact with the surface of the datum (5).

2. The laser tracker (1) according to claim 1, wherein the datum (5) is spherical and the nodal point (50) is the center of mass of the spherical datum (5).

3. The laser tracker (1) according any one of claims 1 or 2, wherein the contacting surface (675) is embodied as a wear-free diamond surface, particularly a wear-free diamond plate.

4. The laser tracker (1) according to any one of the preceding claims, wherein the force supply arrangement comprises a spring (76,77), in particular a pre-tensioned coil spring, being configured to generate a spring force (760,770) acting on the optics unit (6) and causing the optics unit (6) to maintain contact with the surface of the datum (5),
in particular wherein,
- the force supply arrangement is provided by a spring-pair mounted such that the lines of action (761,771) of the springs (76,77) of the spring pair are parallel to the target axis (42), and
- the target axis (42) is located between the lines of action (761,771), in particular located symmetrically between the lines of action (761,771).

5. The laser tracker (1) according to any one of the preceding claims being configured to provide magnetic attraction between the optics unit (6) and the datum (5) to maintain the contact with the surface of the datum (5).

6. The laser tracker (1) according to claim 5, wherein the force supply arrangement is provided by
- a magnetic element (75,751,753) arranged at the optics unit (6), particularly at or in the vicinity of the contacting surface (675), more particularly next to a contacting point on the contacting surface (675) for contacting the tangential point (51), and
- the datum (5) is configured to be magnetically attractable,
in particular wherein
- the force supply arrangement comprises at least one guide (73,74) allowing an uniaxial translation of the optics unit (6),
- the magnetic element (75,751,753) is embodied as a permanent magnet or an electromagnet,
- the datum (5) comprises or is made from ferromagnetic material,
more particularly wherein
- a direction of the uniaxial translation is parallel to the target axis (42), and
- the magnetic element (75,751,753) is mounted with its pole axis (752,754) parallel to the target axis (42), or the force supply arrangement is provided by a pair of magnetic elements (75,751,753) mounted such that the target axis (42) is located symmetrically between the pole axes (752,754) of the magnetic elements (75,751,753).

7. The laser tracker (1) according to any one of claims 5 or 6 comprising a suspension arrangement (70) configured to provide force-free suspension of the optics unit (6),
in particular wherein
the suspension arrangement (70) is configured to support the weight of the optics unit (6) such that a gravity-induced interaction between the contacting surface (675) and the surface of the datum (5) is minimized, in particular prevented, in each relative pose of the optics unit (6) relative to the surface of the datum (5).

8. The laser tracker (1) according to claim 7, wherein the suspension arrangement (70) comprises a tilt axis (700) piercing a center of mass of the optics unit (6) and thereby allows a force-free tilting of the optics unit (6) about the tilt axis (700).

9. The laser tracker (1) according to claim 8, wherein
- the tilt axis (700) is perpendicular to and offset from the target axis (42), and
- the tilt axis (700) and the tangential point (51) define a plane (702) tangential to the surface of the datum (5).

10. The laser tracker (1) according to any one of the preceding claims being configured to perform the distance measurement based on interferometric principles, in particular configured to provide the distance measurement to the target point (2) with submicrometer precision,
in particular wherein
- the fiber (301,600) is embodied as a non-polarizing single mode fiber (301),
- the feed-in point (69) provides an optical reference point (3) for the internal reference path (441),
more particularly wherein a distal end of the fiber (301,600) is located outside the housing (9) and optically coupled to a fiber splitter (66).

11. The laser tracker (1) according to any one of the preceding claims, wherein the optics unit (6) comprises a first part having a first thermal expansion coefficient and a second part having a second thermal expansion coefficient, wherein
- the first thermal expansion coefficient is less than 10⁻⁵ K⁻¹, in particular less than 10⁻⁶ K⁻¹,
- the second thermal expansion coefficient correlates with the thermal expansion coefficient of the datum (5), and
- the second part is dimensioned such that its thermal expansion compensates the thermal expansion of the datum (5).

12. The laser tracker (1) according to any one of the preceding claims comprising a base plate (8), wherein
- the base plate (8) has a fixed spatial relationship with the datum (5) and is configured to define an orientation of the laser tracker (1) with respect to an external coordinate system, and
- the housing (9) is rotatable relative to the base plate (8),
in particular wherein
- the laser tracker (1) comprises a support unit (71) supporting the optics unit (6),
- the support unit (71) is mounted to the base plate (8) rotatably,
- the housing (9) is mounted to the support unit, and
- thermal expansion coefficients of the base plate (8) and the support unit (71) are selected to minimize the thermal movement of the reference point (3) in regard to the base plate (8).

13. The laser tracker (1) according to claim 12, wherein the housing (9)
- is configured to enclose the datum (5) and the optics unit (6) in a dust-and humidity protected manner, and
- comprises a fixed exit window (91) transparent for the measuring beam (4), such that for the distance measurement to the target point (2), the measuring beam (4) exits at the beam exit (68) of the optics unit (6) and then passes the exit window (91),
in particularly wherein the exit window (91)
- has an extent (910) of at least 50°, in particular at least 80°, in direction perpendicular to the plane (80) of base plate (8),
- is formed from chemically strengthened silicate-based glass or from sapphire-based material.

14. The laser tracker (1) according to claim 13 further comprising a handle (82) with fixed spatial relationship to the base plate (8), the laser tracker (1) being configured to provide a transport mode, wherein a rotation of the housing (9) is locked, and the exit window (91) is positioned between the datum (5) and the handle (82).

15. The laser tracker (1) according to any one of the claims 12 to 14, wherein the base plate (8) comprises
- three pads (831-833) protruding from the base plate (8) on a side opposite of the datum (5) and providing a three-point support for the base plate (8), and
- a plurality of drill holes (841-846) configured to accommodate fastening elements providing a mechanical coupling to an external object (93), in particular bolts connected to corresponding sliding blocks (94) on a measurement table,
wherein the plurality of drill holes (841-846) comprises
- a first group of drill holes (841-843), wherein each of the drill holes of the first group of drill holes (841-843) is located within one of the three pads (831-833), and
- a second group of drill holes (844-846), wherein the second group of drill holes (844-846) comprises at least one drill hole outside the three pads (831-833),
in particular wherein a plane defined by a first drill hole (841) from the first group, a second drill hole (844) from the second group and the nodal point (50) is perpendicular to the plane (80) of the base plate (8).
